# DEMANDE DE BREVET EUROPEEN

(11) **EP 1 370 048 A1**
(43) Date de publication de la demande: **10.12.2003**
(21) Numéro de dépôt: 03291321.2
(22) Date de dépôt: 03.06.2003
(51) Int. Cl.: H04L 29/06, G06F 9/50

(54) **Application des réseaux actifs pour la répartition de charge au sein d'une pluralité de serveurs de service**

(30) Priorité: 06.06.2002 FR 0206961
(71) Demandeur: ALCATEL, 75008 Paris (FR)
(72) Inventeur: Marce, Olivier, 91300 Massy (FR); Drago, Carlo, 75014 Paris (FR); Clevy, Laurent, 28000 Chartres (FR); Le Moigne, Olivier, Ottawa, ON, K2B 5K8 (CA); Bereski, Philippe, 91390 Morsang sur Orge (FR); Cartier, Jean-Francois, 44119 Treillieres (FR)
(74) Mandataire: Chaffraix, Sylvain

(57) **Abrégé**

L'invention concerne un équipement de réseau (E₁, E₂, E₃) pour la transmission de paquets de données, certains de ces paquets de données contenant des requêtes de service, ledit service étant mis en oeuvre par une pluralité de serveurs (S₁, S₂, S₃), caractérisé en ce qu'il dispose de moyens pour recevoir des paquets de données contenant ou référençant du code exécutable et des moyens pour décider de la transmission de ces paquets de données à un autre équipement de réseau ou de l'exécution de ce code exécutable qui est prévu pour répartir les requêtes de service parmi la pluralité de serveurs.

## Description

La présente invention concerne la répartition de charge au sein d'un ensemble de serveurs, mettant en oeuvre un même service. L'invention s'applique particulièrement bien aux réseaux actifs.

Différentes solutions de l'état de la technique sont par exemple présentées dans l'article « Load *Balancing your Web site - Practical approaches for distributing HTTP traffic »* de Ralf S. Engelschall, publié en 1998 dans « New architect». Cet article est par exemple disponible sur Internet, à l'adresse suivante :
http://www.webtechniques.com/archives/1998/05/engelschall/

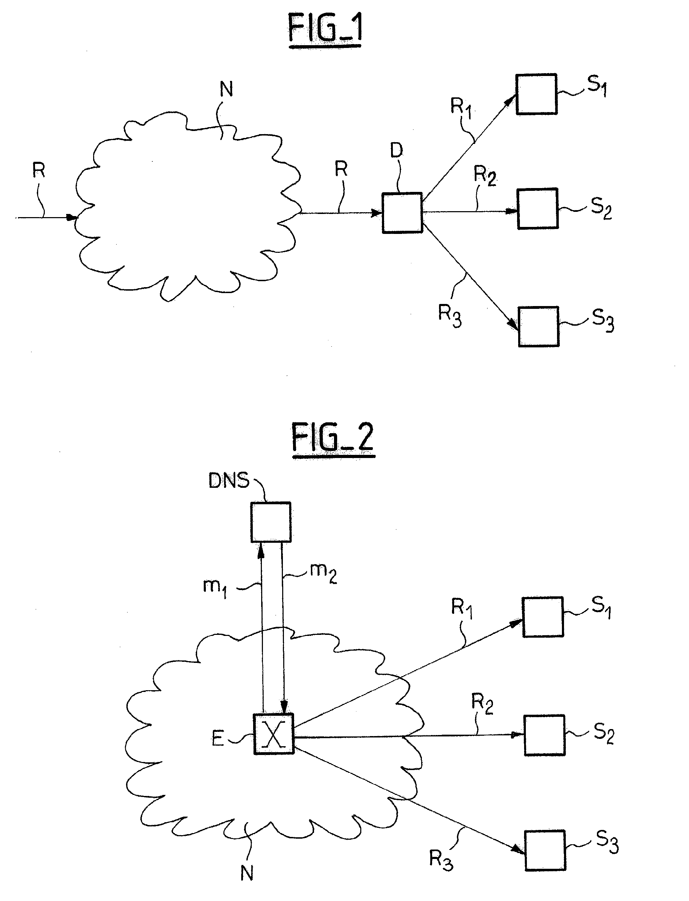

La figure 1 illustre une première solution de l'état de la technique. Dans l'article ci-dessus, cette première solution est intitulée « *The reverse proxy* approach ».

Un équipement, non représenté, transmet une requête de service R. Cette requête est véhiculée par le réseau N. Le service requis est implémenté par plusieurs serveurs S₁, S₂ et S₃. En amont de ces serveurs, il a été prévu un dispositif D chargé de la répartition de charge. C'est ce dispositif qui est appelé « reverse proxy » dans l'article de Ralf S. Engelschall.

À la réception de la requête de service R, ce dispositif va décider de la transmettre vers le serveur S₁ (requête R₁), vers le serveur S₂ (requête R₂) ou bien vers le serveur S₃ (requête R₃). Ce choix dans le serveur destinataire de la requête peut dépendre de règles simples : par exemple, le dispositif D peut transmettre les requêtes de service successivement à chaque serveur, dans l'ordre.

Cette approche présente un principal inconvénient qui est l'absence de flexibilité en terme de topologie. En effet, pour qu'un ensemble de serveurs S₁, S₂, S₃ puisse bénéficier de la fonction de répartition de charge, il est nécessaire que ces serveurs soient situés de telle manière que toutes les requêtes qui leur sont destinées passent par le dispositif D.

La figure 2 illustre une seconde solution de l'état de la technique.

Dans l'article mentionné précédemment, cette solution est intitulée «The DNS approach ».

L'équipement E désire transmettre une requête de service. Classiquement, afin de connaître l'adresse IP (*Internet Protocol*) du serveur implémentant ce service, il interroge un serveur de noms de domaines DNS (pour « *Domain Name Server* ») via un message m₁. En réponse, le serveur de noms de domaines DNS lui retourne un message m₂ contenant cette adresse. Selon cette solution, le serveur de noms de domaines peut être modifié et prévu pour renvoyer l'adresse d'un serveur différent en fonction d'une règle de répartition de charge. Ainsi, en fonction de la réponse de ce serveur de noms de domaine, l'équipement de réseau E va transmettre une requête R₁ vers un serveur S₁, une requête R₂ vers un serveur S₂ ou bien une requête R₃ vers un serveur S₃.

Cette solution permet de réaliser la répartition de charge entre des serveurs situés à différents endroits du réseau, mais soufre d'autres inconvénients. Le premier d'entre eux est le fait qu'une fois qu'une première interrogation du serveur de noms de domaines DNS est effectuée, la réponse est mémorisée (cachée) par l'équipement de réseau E. La requête de service suivante ne fera pas forcément appel au serveur de noms de domaines, et dans ce cas, elle sera dirigée vers le même serveur sans qu'aucun contrôle de l'état de sa charge ne soit effectué.

D'autre part, cette solution repose sur l'hypothèse que l'interrogation du serveur de noms de domaines DNS est effectuée par le client et qu'elle est directement adressée au système de répartition de charge. Cette hypothèse n'est pas valide dans toutes les configurations, notamment lorsqu'une passerelle de type « pare-feu » (ou *firewall* en langue anglaise) émet les interrogations à destination de l'extérieur en lieu et place du client.

Une troisième approche est divulguée par le brevet américain US 6 370 584. Selon cette solution, les différents serveurs fournissant le même service effectuent la répartition entre eux, c'est-à-dire sans l'aide d'un dispositif extérieur. Une telle solution n'est pas satisfaisante dès lors que ces serveurs peuvent être distants : il en résulte alors des communications supplémentaires entre les serveurs pour re-router les requêtes de services qui d'une part peuvent être préjudiciable pour la charge du réseau de télécommunication, mais aussi peuvent engendrer des retards supplémentaires dans le traitement des requêtes de service.

La présente invention a pour but de palier ces différents problèmes posés par les solutions de l'état de la technique.

Pour ce faire, l'invention a pour premier objet un équipement de réseau pour la transmission de paquets de données, certains de ces paquets de données contenant des requêtes de service, le service étant mis en oeuvre par une pluralité de serveurs. Selon l'invention, cet équipement de réseau se caractérise en ce qu'il dispose de moyens pour recevoir des paquets de données contenant ou référençant du code exécutable et des moyens pour décider de la transmission de ces paquets de données à un autre équipement de réseau ou de l'exécution du code exécutable, ce code exécutable étant prévu pour répartir les requêtes de service parmi la pluralité de serveurs.

L'invention a pour second objet un dispositif de gestion associé à une pluralité de serveurs rattachés à un réseau, chacun de ces serveurs mettant en oeuvre un même service. Ce dispositif de gestion se caractérise en ce qu'il dispose de moyens pour transmettre à des équipements de réseau, des codes exécutables ou des références à des codes exécutables, prévus pour répartir les requêtes parmi la pluralité de serveurs.

L'invention a pour troisième objet un procédé pour répartir la charge au sein d'une pluralité de serveurs rattachés à un réseau, mettant en oeuvre un service. Ce procédé se caractérise en ce qu'il comporte une étape de transmission de paquets de données contenant ou référençant du code exécutable prévu pour être exécuté par des équipements du réseau et pour répartir les requêtes de service parmi la pluralité de serveurs.

Selon une mise en oeuvre de l'invention, la pluralité de serveurs est répartie en plusieurs groupes, chaque groupe étant rattaché à un équipement différent du réseau.

Outre la résolution des problèmes des solutions de l'état de la technique, l'invention permet de surcroît de gérer aisément la situation dans laquelle les serveurs ne seraient pas rattachés à un unique équipement du réseau.

L'invention et ses avantages apparaîtront de façon plus claire dans la description d'une mise en oeuvre de l'invention, qui va suivre, en liaison avec les figures annexées.

Les figures 1 et 2, déjà commentées, illustrent deux solutions de l'état de la technique.

La figure 3 représente le fonctionnement du mécanisme de répartition de charge selon l'invention.

La figure 4 schématise la mise en place de ce mécanisme.

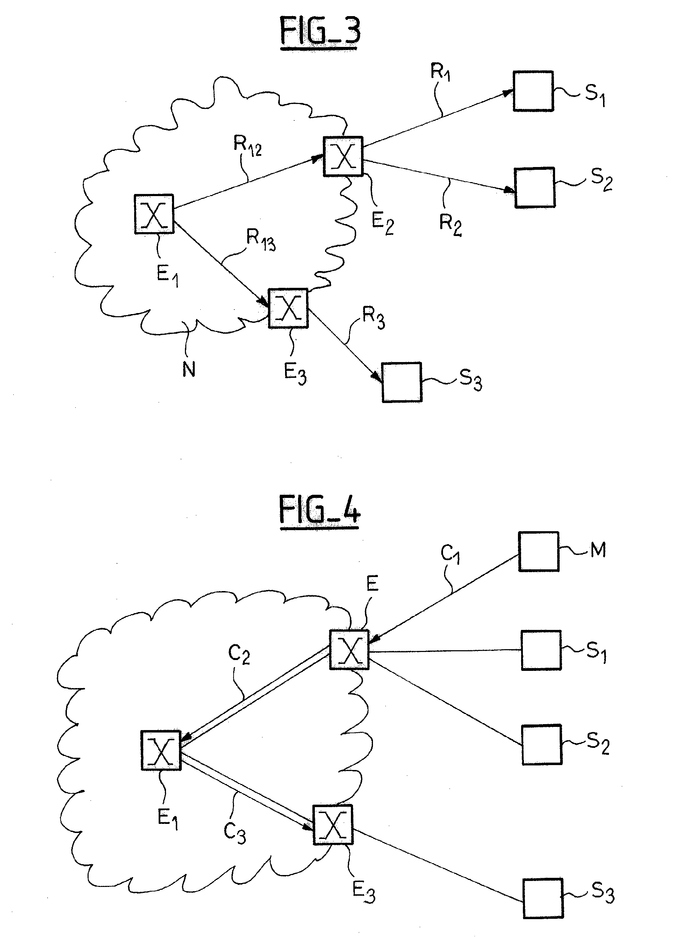

Sur la figure 3, l'équipement de réseau E₁ reçoit une requête de service. Cet équipement de réseau est par exemple un routeur IP, et le réseau N auquel il appartient est un réseau de données de technologie IP (*Internet Protocol*).

Cet équipement de réseau E₁ possède un code exécutable prévu pour répartir cette requête de service parmi deux équipements de réseau « en sortie », E₂ et E₃.

Cette répartition peut par exemple être conforme aux ressources des serveurs associés aux chemins correspondant aux équipements de réseau E₁ et E₂. Si, par exemple, chaque serveur de l'ensemble des serveurs S₁, S₂ et S₃ dispose de ressources équivalentes, la ressource globale associée au chemin allant vers l'équipement de réseau E₂ sera 2 fois plus élevée que celle associée au chemin allant vers l'équipement de réseau E₃.

Une règle simple de répartition pourra alors être de faire une répartition statistique du nombre de requête vers les deux équipements E₂ et E₃, avec un poids 2 pour l'équipement E₂ et un poids 1 pour l'équipement E₃. Autrement dit, chaque requête de service parvenant à l'équipement E₁ aura une probabilité 2/3 d'être transmise, selon une requête R₁₂ vers l'équipement E₂ et une probabilité de 1/3 d'être transmise, selon une requête R₁₃ vers l'équipement E₃.

L'équipement de réseau E₂ possède deux serveurs S₁, S₂ qui lui sont rattachés. De la même façon que l'équipement de réseau E₁, il dispose d'un code exécutable prévu pour répartir les requêtes de service qui lui parviennent.

À titre d'exemple, si les deux serveurs S₁ et S₂ disposent de ressources équivalentes, le code exécutable exécuté par l'équipement E₂ peut simplement répartir les requêtes de service entrantes R₁₂ de façon équiprobable, soit vers le serveur S₁ en une requête R₁, soit vers le serveur S₃ en une requête R₂.

Enfin, l'équipement de réseau E₃ transmettra normalement les requêtes de services entrantes R₁₃ à destination du serveur S₃, aucune répartition de charge n'ayant lieu à cet endroit.

L'exemple de règle de répartition mise en oeuvre par le code exécutable, qui a été donnée, l'a été à titre non limitatif. D'autres heuristiques sont bien évidemment possibles, de même que des algorithmes plus évolués.

La figure 4 montre une façon dont les codes exécutables peuvent être transmis aux équipements de réseau.

Selon une mise en oeuvre de l'invention, ces exécutables sont transmis par un dispositif de gestion M. La transmission peut consister :
- À transmettre un paquet de données contenant le code exécutable,
- Ou à transmettre un paquet de données contenant une référence de ce code exécutable. Le code exécutable lui-même peut être mémorisé dans les équipements de réseau eux-mêmes ou bien dans un serveur de codes exécutables, non représenté sur la figure.

Ces deux mécanismes répondent aux principes généraux de la technologie connue sur le nom de « réseau actif ».

La référence peut par exemple être un identificateur permettant de déterminer un code exécutable unique sur un serveur de codes exécutables, ou sur l'équipement de réseau lui-même.

Dans le cas où le paquet de données contient le code exécutable, celui-ci peut par exemple être prévu pour s'exécuter sur une plate-forme logicielle de type CORBA (*Common Object Request Broker Architecture)* tel que spécifiée par l'OMG (*Object Management Group*). Ceci permet au code exécutable d'interagir de façon plus simple avec les différents composants logiciels préalablement installés sur l'équipement de réseau.

Le dispositif de gestion M est préférentiellement prévu pour transmettre des codes exécutables différents à plusieurs équipements de réseau : par exemple, il transmettra un code exécutable c₁ à l'équipement E₁, un code exécutable c₂ à un équipement E₂ et un code exécutable c₃ à un équipement E₃.

On peut ainsi facilement modifier les règles de répartition de charge, en transmettant à l'équipement de réseau adéquat, un nouveau code exécutable.

Par exemple, si le serveur S₁ devient indisponible ou trop chargée, on peut transmettre à l'équipement de réseau E₂ un nouveau code exécutable prévu pour transmettre toutes les requêtes de service vers le serveur S₂.

Étant donné que dans ce cas, la répartition des ressources est faite entre le groupe de serveurs rattaché à l'équipement E₂ et celui rattaché à l'équipement E₃, un nouveau code exécutable peut aussi être transmis à l'équipement E₁.

Ce nouveau code actif peut par exemple être prévu pour transmettre les requêtes de service arrivantes, de façon équiprobable vers les équipements E₂ et E₃.

Un autre avantage est que le dispositif de gestion M peut être étroitement associé aux serveurs S₁, S₂, S₃. Par exemple, il peut régulièrement sonder les serveurs ou obtenir des informations de ceux-ci, afin de déterminer leur degré de charge. En fonction de ces informations, il peut déterminer de nouvelles règles de répartition à appliquer et déterminer les codes exécutables à transmettre aux équipements adéquats.

Par ailleurs, il devient possible, grâce à l'invention, de supprimer ou d'ajouter des serveurs. Par exemple, si un nouveau serveur mettant en oeuvre le service est rattaché à l'équipement E₃, le dispositif de gestion M pourra transmettre un nouveau code exécutable aux équipements de réseau E₁ et E₃.

Il est également possible de prévoir plusieurs dispositifs de gestion. Chacun d'entre eux peut alors gérer une partie des serveurs disponibles. Une répartition possible consiste à ce que chaque dispositif de gestion gère les serveurs qui lui sont topologiquement proches, par exemple dans le même sous-réseau. Dans ce cas, chaque dispositif de gestion est responsable de l'envoie du code exécutable à l'équipement de réseau le plus proche, de façon à répartir la charge selon la politique choisie.

Selon une mise en oeuvre de l'invention, le ou les dispositif(s) de gestion M peut ou peuvent être localisé(s) sur un des serveurs S₁, S₂, S₃. Ce peut par exemple être un module logiciel exécuté sur ce serveur.

## Revendications

1. Équipement de réseau (E₁, E₂, E₃) pour la transmission de paquets de données, certains de ces paquets de données contenant des requêtes de service, ledit service étant mis en oeuvre par une pluralité de serveurs (S₁, S₂, S₃), **caractérisé en ce qu'**il dispose de moyens pour recevoir des paquets de données contenant ou référençant du code exécutable et des moyens pour décider de la transmission desdits paquets de données à un autre équipement de réseau ou de l'exécution dudit code exécutable, ledit code exécutable étant prévu pour répartir lesdites requêtes de service parmi ladite pluralité de serveurs.

2. Dispositif de gestion (M) associé à une pluralité de serveurs (S₁, S₂, S₃) rattachés à un réseau (N), chacun desdits serveurs mettant en oeuvre un même service, **caractérisé en ce qu'**il dispose de moyens pour transmettre à des équipements de réseau (E₁, E₂, E₃) des codes exécutables ou des références de codes exécutables (c₁, c₂, c₃), prévus pour répartir les requêtes parmi ladite pluralité de serveurs.

3. Procédé pour répartir la charge au sein d'une pluralité de serveurs (S₁, S₂, S₃) rattachés à un réseau (N), mettant en oeuvre un service, **caractérisé en ce qu'**il comporte une étape de transmission de paquets de données contenant ou référençant du code exécutable (c₁, c₂, c₃) prévu pour être exécuté par des équipements (E₁, E₂, E₃) dudit réseau et pour répartir les requêtes de service parmi ladite pluralité de serveurs.

4. Procédé selon la revendication précédente, dans lequel ladite pluralité de serveurs est répartie en plusieurs groupes, chaque groupe étant rattaché à un équipement différent dudit réseau.
